# EUROPÄISCHE PATENTANMELDUNG

(11) **EP 2 881 276 A1**
(43) Veröffentlichungstag der Anmeldung: **10.06.2015**
(21) Anmeldenummer: 14193572.6
(22) Anmeldetag: 18.11.2014
(51) Int. Cl.: B60K 1/04

(54) **Ladekabellageranordnung für ein Kraftfahrzeug und Kraftfahrzeug damit**

(30) Priorität: 05.12.2013 DE 102013225036
(71) Anmelder: GFi Gesellschaft für technische Ingenieurleistungen mbH, 70839 Gerlingen (DE)
(72) Erfinder: Eckhart, Florian, 74074 Heilbronn (DE); Fruhner, Jonas, 48485 Neuenkirchen (DE)
(74) Vertreter: Kohler Schmid Möbus Patentanwälte

(57) **Zusammenfassung**

Die Erfindung betrifft eine Ladekabellageranordnung (1) für ein Kraftfahrzeug, umfassend: ein Ladekabel (2) mit einem einenends daran angebrachten Ladestecker (4) zur Verbindung des Ladekabels (2) mit einer Ladestation, einen Aufnahmebehälter (5), in dessen Innenraum (6) der Ladestecker (4) lagerbar ist, wobei der Aufnahmebehälter (5) eine Öffnung (7) zum Herausnehmen oder Einlegen des Ladesteckers (4) aufweist, sowie eine Kennzeichen-Halterungseinrichtung (8) zur Halterung eines Kraftfahrzeug-Kennzeichenschilds, die von einer die Öffnung (7) abdeckenden Position in eine die Öffnung (7) freigebende Position und umgekehrt bewegbar ist. Die Erfindung betrifft auch ein Kraftfahrzeug mit einer solchen Ladekabellageranordnung (1), bei dem der Aufnahmebehälter (5) in einem Bereich hinter einem Kraftfahrzeug-Kennzeichenschild, insbesondere in einem Bereich hinter einem rückwärtigen Kraftfahrzeug-Kennzeichenschild, angebracht ist.

## Beschreibung

Die vorliegende Erfindung betrifft eine Ladekabellageranordnung für ein Kraftfahrzeug und ein Kraftfahrzeug mit einer derartigen Ladekabellageranordnung.

In den letzten Jahren ist in der Automobilindustrie ein Trend zur zunehmenden Elektromobilität zu erkennen, der von einem stetigen und starken Zuwachs an Elektro- und Hybridfahrzeugen gekennzeichnet ist. Sowohl bei Elektrofahrzeugen als auch bei Hybridfahrzeugen kann die Kraftfahrzeug-Batterie bei Bedarf über ein mit einer Ladestation verbindbares Ladekabel aufgeladen werden.

Zur elektrischen Verbindung eines Ladekabels eines Elektro- oder Hybridfahrzeugs mit einer Ladestation bestehen verschiedene Möglichkeiten: Das Ladekabel kann einenends fest mit der Ladestation verbunden sein und anderenends über einen Ladestecker mit dem Kraftfahrzeug verbindbar sein. Das Ladekabel kann auch an beiden Enden jeweils einen Ladestecker aufweisen, der mit der Ladestation bzw. mit dem Kraftfahrzeug verbindbar ist.

Im letztgenannten Fall wird das Ladekabel typischer Weise im Kraftfahrzeug mitgeführt. Zu diesem Zweck wird das Ladekabel in der Regel zusammengerollt oder zusammengelegt und im Kofferraum oder ggf. in einem dafür vorgesehenen Transportfach abgelegt. Bekannt sind auch Lösungen, bei denen das zusammengerollte Ladekabel in einem Transportbeutel untergebracht wird, der im Kofferraum abgelegt wird. Bei einem Ladevorgang muss das Ladekabel aus dem Transportbeutel entnommen und abgerollt werden, um es mit der Ladestation zu verbinden. Die Handhabung eines derart verstauten Ladekabels ist vergleichsweise umständlich. Auch kann ein im Kofferraum abgelegtes Ladekabel hin- und her rutschen und durch Stöße an den Kofferraumwänden zu unerwünschten Begleitgeräuschen im Fahrzeuginnenraum führen. Auch bei anderen bekannten Lösungen werden Ladekabel an ergonomisch ungünstigen Stellen im Fahrzeug gelagert.

### Aufgabe der Erfindung

Es ist die Aufgabe der vorliegenden Erfindung, eine Ladekabellageranordnung für ein Kraftfahrzeug sowie ein Kraftfahrzeug mit einer Ladekabellageranordnung bereitzustellen, die eine verbesserte Handhabung des Ladekabels erlauben. Insbesondere soll eine ergonomischere Handhabung des Ladekabels ermöglicht werden.

### Gegenstand der Erfindung

Diese Aufgabe wird erfindungsgemäß gelöst durch eine Ladekabellageranordnung für ein Kraftfahrzeug, umfassend ein Ladekabel mit einem einenends daran angebrachten Ladestecker zur Verbindung des Ladekabels mit einer Ladestation, einen Aufnahmebehälter, in dessen Innenraum der Ladestecker lagerbar ist, wobei der Aufnahmebehälter eine Öffnung zum Herausnehmen oder Einlegen des Ladekabels aufweist, sowie eine Kennzeichen-Halterungseinrichtung zur Halterung eines Kraftfahrzeug-Kennzeichenschilds, die von einer die Öffnung abdeckenden Position in eine die Öffnung freigebende Position und umgekehrt bewegbar ist.

Ein wesentlicher Vorteil der erfindungsgemäßen Ladekabellageranordnung ist darin zu sehen, dass durch das Vorsehen des Aufnahmebehälters für den Ladestecker im Bereich des Kraftfahrzeug-Kennzeichenschilds, genauer gesagt hinter dem Kraftfahrzeug-Kennzeichenschild, einem Anwender eine benutzerfreundliche und ergonomische Handhabung des Ladekabels ermöglicht wird. Umständliche Tätigkeiten wie z.B. das Herausnehmen des Ladekabels aus einem Transportbeutel entfallen. Ferner ist eine leichte Zugänglichkeit des Ladesteckers von außerhalb des Kraftfahrzeugs gegeben, um das Ladekabel mit der Ladesäule bzw. Ladestation zu verbinden.

Um eine elektrische Verbindung mit einer Ladestation herzustellen, wird die Kennzeichen-Halterungseinrichtung, die typischer Weise als Trägerplatte bzw. als Trägerrahmen ausgebildet ist, zunächst von der die Öffnung abdeckenden Position in die die Öffnung freigebende Position bewegt. Somit kann der Anwender den über die freigegebene Öffnung zugänglich gewordenen und in dem Innenraum des beispielsweise topfförmig ausgebildeten Aufnahmebehälters ab- bzw. eingelegten Ladestecker per Hand ergreifen und herausnehmen. Dabei kann er das Ladekabel auf eine Länge ausziehen, die es ihm ermöglicht, über das Ladekabel eine elektrische Verbindung zwischen der Ladesäule und dem Fahrzeug herzustellen. Nach dem erfolgten Ladevorgang wird die elektrische Verbindung zwischen dem ladesteckerseitigen Ende des Ladekabels und der Ladestation getrennt und der Ladestecker wird wieder über die freigegebene Öffnung vollständig in den Innenraum des Aufnahmebehälters ein- bzw. abgelegt. Schließlich kann die Kennzeichen-Halterungseinrichtung von der die Öffnung freigebenden Position in die die Öffnung abdeckende Position bewegt werden, sodass das Vorhandensein der Ladekabellageranordnung von außen nicht erkennbar ist. Die Kennzeichen-Halterungseinrichtung, genauer gesagt die Trägerplatte, dient zur Befestigung des Kraftfahrzeug-Kennzeichenschilds, das typischer Weise an diesem angeschraubt wird.

Bei einer bevorzugten Ausführungsform der Ladekabellageranordnung weist das Ladekabel anderenends einen Anschluss auf, der fest, d.h. dauerhaft, mit dem Kraftfahrzeug verbindbar ist. Auf diese Weise ist sichergestellt, dass das Ladekabel nicht verloren geht. Der Anwender muss zudem keine elektrische Verbindung zwischen dem Ladekabel und dem Kraftfahrzeug herstellen, wie dies bei einem Ladekabel mit beidseitig angebrachten Ladesteckern der Fall wäre.

Bei einer bevorzugten Ausführungsform umfasst die Ladekabellageranordnung eine in dem Innenraum des Aufnahmebehälters angeordnete Halterungseinrichtung zur Halterung des eingelegten Ladesteckers. Durch die Halterungseinrichtung ist eine verrutschsichere Fixierung des Ladesteckers in dem Aufnahmebehälter möglich. Die Halterungseinrichtung kann einteilig oder mehrteilig ausgebildet sein. Beispielsweise kann ein erster Teil der Halterungseinrichtung einen vorderen Abschnitt des Ladesteckers aufnehmen und ein zweiter Teil der Halterungseinrichtung kann einen hinteren Abschnitt des Ladesteckers aufnehmen. Zwischen dem ersten und dem zweiten Teil der Halterungseinrichtung kann dann zum Beispiel ein Freiraum bzw. eine Aussparung gebildet sein, die zum Ergreifen bzw. Umgreifen des Ladesteckers beim Herausnehmen oder Einlegen des Ladesteckers dient. Ein solcher Freiraum zum Umgreifen des Ladesteckers kann auch an einer einteiligen Halterungseinrichtung beispielsweise in Form einer Griffmulde gebildet sein.

Die Halterungseinrichtung kann auch einen Rastmechanismus aufweisen, der ein Einrasten des Ladesteckers im in die Halterungseinrichtung eingelegten Zustand ermöglicht und somit für eine sichere Halterung des Ladesteckers auch bei großen Beschleunigungen des Kraftfahrzeugs sorgt. Die Halterungseinrichtung kann beispielsweise aus einem Schaumstoffmaterial bzw. aus einem oder mehreren Schaumstoffblöcken mit Vertiefungen für die Halterung des Ladesteckers gebildet sein.

Bevorzugt ist auch eine Ausführungsform, bei der die Ladekabellageranordnung eine typischer Weise mechanische oder elektrisch motorisierte Wickelvorrichtung zum Auf- und Abwickeln des Ladekabels umfasst. Durch die Wickelvorrichtung, typischer Weise in Form einer Kabeltrommel, ist ein gleichmäßiger Auf- und Abwickelvorgang möglich, der das Ladekabel schont. Das Auf- und Abwickeln erfolgt typischer Weise stufenlos. Die Wickelvorrichtung kann elektrisch motorisiert sein, d.h. das Ladekabel kann mittels eines elektrischen Motors sowie gegebenenfalls eines entsprechenden Getriebes aufgerollt sowie ggf. auch abgerollt werden. Alternativ kann das Auf- und Abwickeln des Ladekabels auch rein mechanisch, d.h. ohne einen Motor, erfolgen.

Bei einer weiteren Ausführungsform weist die Ladekabellageranordnung eine Schwenkeinrichtung zum Verschwenken der Kennzeichen-Halterungseinrichtung von der die Öffnung abdeckenden Position in die die Öffnung freigebende Position und umgekehrt auf. Zur Bewegung der Kennzeichen-Halterungseinrichtung zwischen den beiden Positionen können unterschiedliche Kinematiken verwendet werden. Die Kennzeichen-Halterungseinrichtung kann beispielsweise um eine in einem oberen Bereich, insbesondere an einem oberen Rand, des Aufnahmebehälters angeordnete Gelenk-Achse schwenkbar gelagert sein. Die verschwenkte Halterungseinrichtung mit dem daran befestigten Kraftfahrzeug-Kennzeichenschild wirkt (in der in das Kraftfahrzeug eingebauten Lage) als ein Schutz des Aufnahmebehälters bzw. des Ladekabels vor Niederschlag und/oder Spritzwasser.

Bei einer bevorzugten Weiterbildung umfasst die Schwenkeinrichtung Scharniermittel, die insbesondere als Parallelkinematik, d.h. in Form von zwei oder mehr parallel wirkenden Scharnieren bzw. Gelenken ausgebildet sind. Die Schwenkeinrichtung kann neben den beispielsweise als Gelenke oder Gelenkarme ausgebildeten Scharniermitteln auch Bewegungsdämpfer, beispielsweise Gasfederdämpfer, umfassen. Mit Hilfe der Schwenkeinrichtung kann die Kennzeichen-Halterungseinrichtung von der die Öffnung abdeckende Position in die die Öffnung freigebende Position und zurück verschwenkt werden, wobei die Schwenkbewegung aus die Halterungseinrichtung parallel versetzenden und/oder die Halterungseinrichtung drehenden Bewegungskomponenten zusammengesetzt sein kann.

Bevorzugt ist eine Ausführungsform, bei der die Ladekabellageranordnung eine Aktivierungseinrichtung zum Aktivieren einer typischer Weise mechanischen oder elektrisch motorisierten Öffnungsbewegung der Kennzeichen-Halterungseinrichtung von der die Öffnung abdeckenden in die die Öffnung freigebende Position umfasst. Die Aktivierungseinrichtung kann eine "Push-Funktion" umfassen, d.h. die Öffnungsbewegung kann durch ein Antippen der Halterungseinrichtung bzw. des Kennzeichenschildes aktiviert werden. Auf diese Weise ist eine komfortable Aktivierungsmöglichkeit eines die Öffnungsbewegung durchführenden (Antriebs-)Mechanismus gegeben. Der Öffnungsmechanismus kann beispielsweise mittels einer vorgespannten Feder oder eines teleskopierbaren Arms auf die Scharniermittel einwirken, um die Kennzeichen-Halterungseinrichtung von der abdeckenden in die freigebende Position zu bewegen. Im ersteren Fall kann beispielsweise ein Andrücken des Kennzeichenschilds gegen die vorgespannte Feder eine Sperre lösen und somit die Öffnungsbewegung ermöglichen. Bei der Bewegung von der freigebenden in die abdeckende Position durch einen Bediener wird die Feder erneut vorgespannt und in der abdeckenden Position arretiert, so dass die Öffnungs- und Schließbewegung rein mechanisch, d.h. ohne einen Motor, erfolgt. Alternativ kann die Aktivierungseinrichtung auch ein elektrisches Signal an einen Öffnungsmechanismus bzw. einen motorischen Antrieb übermitteln, um die Öffnungsbewegung der Kennzeichen-Halterungseinrichtung auszulösen.

Gegebenenfalls kann während des Ladevorgangs die Kennzeichen-Halterungseinrichtung zum Schutz des Innenraums des Aufnahmebehälters nach unten geklappt bzw. geschwenkt werden, so dass nur ein Spalt zwischen der Halterungseinrichtung und der Öffnung des Aufnahmebehälters verbleibt. In diesem Fall kann an der dem Kraftfahrzeug abgewandten Seite der Halterungseinrichtung eine Aussparung für das Ladekabel vorgesehen sein. Die Aussparung kann beispielsweise an einem plattenförmigen Schaumstoffblock gebildet sein, der auf der Rückseite des Trägerrahmens für das Kraftfahrzeug-Kennzeichenschild angebracht ist.

Die oben genannte Aufgabe wird auch gelöst durch ein Kraftfahrzeug mit einer Ladekabellageranordnung wie oben beschrieben, bei dem der Aufnahmebehälter in einem Bereich hinter einem Kraftfahrzeug-Kennzeichenschild, insbesondere in einem Bereich hinter dem rückwärtigen Kraftfahrzeug-Kennzeichenschild, angebracht ist. Aufgrund der Anordnung des Aufnahmebehälters auf der Höhe des Kraftfahrzeug-Kennzeichens kann ein Anwender den Ladestecker leicht ergreifen, indem er lediglich die Arme anwinkelt. Idealer Weise muss sich der Anwender insbesondere nicht bücken, um den Ladestecker zu ergreifen. Ferner wird durch die Anordnung des Aufnahmebehälters in dem Bereich hinter dem Kraftfahrzeug-Kennzeichenschild ein Bauraum des Kraftfahrzeugs genutzt, der insbesondere bei Kraftfahrzeugen des Typs SUV (Sport-Utility-Vehicle) zur Montage der Ladekabellageranordnung gut geeignet ist. Es versteht sich, dass es sich bei dem Kraftfahrzeug nicht zwingend um einen SUV handeln muss, auch wenn die Verwendung der Ladekabellageranordnung bei einem solchen Kraftfahrzeug besonders vorteilhaft ist.

Bevorzugt ist eine Ausführungsform des Kraftfahrzeugs, bei der die Ladekabellageranordnung an der Heckklappe des Kraftfahrzeugs angebracht ist. In diesem Fall ist auch das Kraftfahrzeug-Kennzeichenschild an der Heckklappe angebracht und somit typischer Weise in einem Höhebereich positioniert, der für einen Anwender gut zugänglich ist, was eine ergonomische Handhabung des Ladesteckers ermöglicht.

Bei einer bevorzugten Ausführungsform ist zur Montage der Ladekabellageranordnung an der Karosserie des Kraftfahrzeugs, insbesondere an der Heckklappe, eine Öffnung zum Einsetzen des in der Regel topfförmigen Aufnahmebehälters ausgebildet. Über die Öffnung in der Karosserie kann der Aufnahmebehälter in die Kraftfahrzeug-Karosserie eingesetzt und mit dieser beispielsweise über eine Schraubverbindung ggf. in Kombination mit einer Rastverbindung montiert werden. Der Aufnahmebehälter ist bevorzugt aus einem Kunststoffmaterial oder einem Leichtmetall gebildet. Im Vergleich zu einem Aufnahmebehälter, der vollständig aus Karosserieblech hergestellt ist, ergibt sich somit eine Gewichtsersparnis. Ein Kunststoff-Aufnahmebehälter kann zum Beispiel in einem Spritzgussverfahren hergestellt werden.

Bei einer weiteren Ausführungsform ist die Kennzeichen-Halterungseinrichtung in der die Öffnung abdeckenden Position durch die Zentralverriegelung des Kraftfahrzeugs arretierbar. Sofern die Kennzeichen-Halterungseinrichtung sich beim Aktivieren der Zentralverriegelung nicht in der die Öffnung abdeckenden Position befindet, kann ein Warnsignal an den Bediener ausgegeben werden. Durch die Arretierung der Kennzeichen-Halterungseinrichtung ist sichergestellt, dass sich unbefugte Personen über die Öffnung und den Aufnahmebehälter keinen unerlaubten Zugang zu dem Kraftfahrzeug verschaffen können.

Bei einer weiteren bevorzugten Ausführungsform des Kraftfahrzeugs befindet sich die die Öffnung freigebende Position der Kennzeichen-Halterungseinrichtung an dem Kraftfahrzeug oberhalb der die Öffnung abdeckenden Position der Kennzeichen-Halterungseinrichtung. Auf diese Weise ist bei in die freigebende Position bewegtem Kennzeichenschild eine gute Einsehbarkeit in den Innenraum des Ablagebehälters gegeben. Insbesondere wenn die Halterungseinrichtung bzw. das Kennzeichenschild in der die Öffnung freigebenden Position im Wesentlichen horizontal ausgerichtet ist, kann der Innenraum des Ablagebehälters bzw. der Ladestecker durch die Halterungseinrichtung vor Niederschlägen geschützt werden.

Bevorzugt umfasst das Kraftfahrzeug weiter eine Kraftfahrzeug-Batterie sowie ein einenends mit der Kraftfahrzeug-Batterie oder anderen System-Komponenten, wie beispielsweise einem Ladegerät für die Kraftfahrzeug-Batterie verbundenes Verbindungskabel, das anderenends mit dem Ladekabel elektrisch verbindbar ist. Das Verbindungskabel kann beispielsweise über einen kraftfahrzeugseitigen Anschluss mit dem Anschluss des Ladekabels der Ladekabellageranordnung verbunden werden. Die Kraftfahrzeug-Batterie, welche die Energie zum Antrieb des Kraftfahrzeugs zur Verfügung stellt, beispielsweise eine Lithium-Ionen-Batterie, ist in der Regel im Bereich der Rücksitze, im Kofferraum oder im Bereich des Unterbodens im Kraftfahrzeug angeordnet.

Bei einer bevorzugten Weiterbildung sind das Ladekabel und das Verbindungskabel über ein heckklappenseitiges Kontaktelement und ein damit zusammenwirkendes karosserieseitiges Kontaktelement elektrisch verbindbar. Unter einem karosserieseitigen Kontaktelement wird ein Kontaktelement verstanden, das an der die Heckklappe umgebenden Karosserie des Fahrzeugs angebracht ist. Die beiden Kontaktelemente wirken bei geschlossener Heckklappe zusammen und stellen eine elektrische Verbindung zwischen dem Ladekabel und der Kraftfahrzeug-Batterie her. Auf diese Weise ist keine vergleichsweise lange Kabelführung über die Heckklappe, das Kraftfahrzeugdach und die B- oder C-Säule des Kraftfahrzeugs hin zur Kraftfahrzeug-Batterie erforderlich. Durch die geringe Gesamtlänge der Kabelverbindung ist eine weitere Gewichtsreduktion möglich. Das Verbindungskabel muss insbesondere nicht durch den im Scharnier der Heckklappe befindlichen Kabelkanal geführt werden, bei dem der maximale Biegeradius des Ladekabels gegebenenfalls unterschritten werden könnte. Die Kontaktelemente können beispielsweise als Stecker-Buchse-Verbindungen ausgeführt sein. Insbesondere für den Fall, dass das Kraftfahrzeug-Kennzeichenschild nicht an der Heckklappe angebracht ist, kann das Ladekabel auch direkt, d.h. ohne ein Verbindungskabel, mit der Kraftfahrzeug-Batterie verbunden werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Ladekabellageranordnung für ein Kraftfahrzeug in einer Explosionsdarstellung;
- Fig. 2: eine Querschnittsdarstellung eines hinteren Teils eines Kraftfahrzeugs mit einer Ladekabellageranordnung gemäß Fig. 1;
- Fig. 3: eine Rückansicht des Kraftfahrzeugs gemäß Fig. 2; und
- Fign. 4a bis 4c: drei jeweils in einem Querschnitt dargestellte Beispiele für Schwenkeinrichtungen der Ladekabellageranordnung.

In der folgenden Beschreibung der Zeichnung werden für gleiche bzw. funktionsgleiche Bauteile identische Bezugszeichen verwendet.

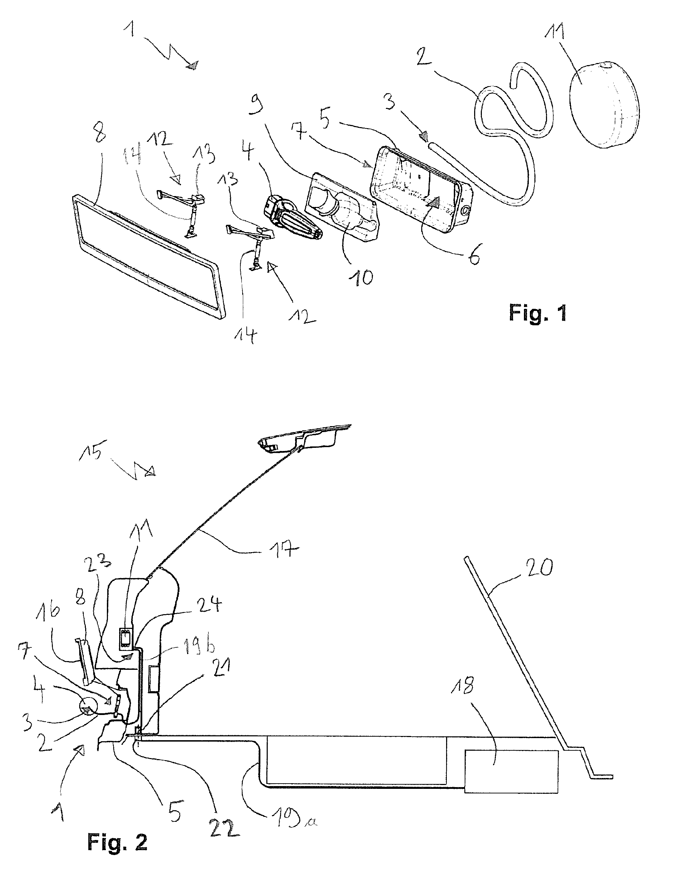

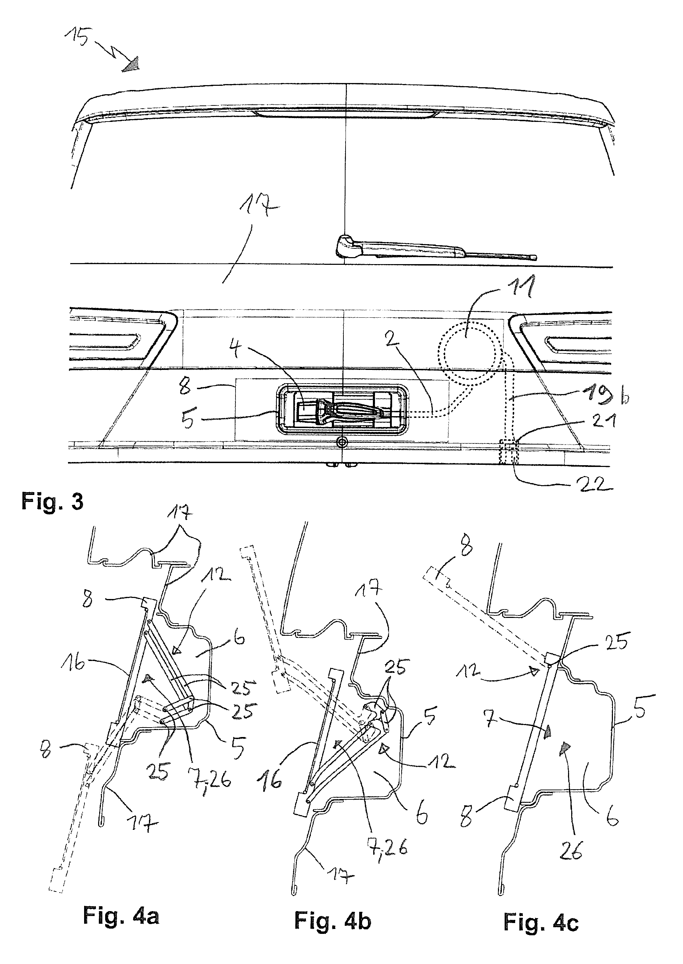

**Fig. 1** zeigt eine Ladekabellageranordnung 1 für ein Kraftfahrzeug mit einem Ladekabel 2, an dessen einen Ende 3 ein Ladestecker 4 zur Verbindung des Ladekabels 2 mit einer Ladestation anbringbar ist. Die Ladekabellageranordnung 1 umfasst einen topfartigen Aufnahmebehälter 5, in dessen Innenraum 6 der Ladestecker 4 lagerbar ist (vgl. z.B. Fig. 3), wobei der Aufnahmebehälter 5 eine Öffnung 7 zum Herausnehmen oder Einlegen des Ladesteckers 4 aufweist. Die Ladekabellageranordnung 1 weist des Weiteren eine Kennzeichen-Halterungseinrichtung 8 in Form eines Trägerrahmens bzw. einer Trägerplatte zur Halterung eines Kraftfahrzeug-Kennzeichenschilds auf, die von einer die Öffnung 7 abdeckenden Position in eine die Öffnung 7 freigebende Position und umgekehrt bewegbar ist (vgl. z.B. Fign. 4a-c). Das Kraftfahrzeug-Kennzeichen wird typischer Weise an der Kennzeichen-Halterungseinrichtung 8 angeschraubt oder angeklipst.

Die Ladekabellageranordnung 1 umfasst auch eine in dem Innenraum 6 des Aufnahmebehälters 5 angeordnete Halterungseinrichtung 9 für den Ladestecker 4, durch die der eingelegte Ladestecker 4 verrutschsicher in dem Aufnahmebehälter 5 gehaltert werden kann und die im gezeigten Beispiel aus Schaumstoff besteht. An der Halterungseinrichtung 9 ist eine Griffmulde 10 bzw. ein Freiraum zum Umgreifen des Ladesteckers 4 gebildet. Zum Auf- und Abwickeln des Ladekabels 2 umfasst die Ladekabellageranordnung 1 des Weiteren eine Wickelvorrichtung 11 in Form einer Kabeltrommel, die ein das Ladekabel 2 schonenden stufenlosen Auf- und Abwickelvorgang ermöglicht. Um den Ladestecker 4 in die Halterungseinrichtung 9 einzulegen und somit den Ladestecker 4 in dem Aufnahmebehälter 5 zu lagern, wird das Ladekabel 2 mittels der Wickelvorrichtung 11 aufgewickelt. Zur Verbindung des Ladesteckers 4 mit einer Ladestation wird das Ladekabel 2 von der Wickelvorrichtung 11 abgewickelt. Das Ladekabel 2 ist über eine in Fig. 1 gezeigte seitliche Gummitülle in den Innenraum 6 des Aufnahmebehälters 5 geführt.

Die Ladekabellageranordnung 1 weist ferner zum Verschwenken der Kennzeichen-Halterungseinrichtung 8 von der die Öffnung 7 abdeckenden Position in die die Öffnung 7 freigebende Position und umgekehrt eine Schwenkeinrichtung 12 auf. Die in Fig. 1 dargestellte Schwenkeinrichtung 12 weist Scharniermittel 13 auf, die als Parallelkinematik ausgebildet sind. Um die Kennzeichen-Halterungseinrichtung 12 von der abdeckenden in die freigebende Position zu bewegen, können unterschiedliche Kinematiken vorgesehen sein (vgl. Fign. 4a bis 4c).

Die Ladekabellageranordnung 1 umfasst auch eine Aktivierungseinrichtung 14 zum Aktivieren einer beispielsweise motorisierten oder rein mechanischen Öffnungsbewegung der Kennzeichen-Halterungseinrichtung 8 von der die Öffnung 7 abdeckenden in die die Öffnung 7 freigebende Position. Die Aktivierungseinrichtung 14 kann beispielsweise durch ein Antippen der Halterungseinrichtung 8 bzw. des Kennzeichenschildes ausgelöst werden. Die Aktivierungseinrichtung 14 weist im gezeigten Beispiel zwei Federn auf, die in der abdeckenden Position vorgespannt und verriegelt bzw. arretiert sind. Das Antippen der Halterungseinrichtung 8 löst die mechanische Verriegelung, so dass die Öffnungsbewegung erfolgen kann. Die Aktivierung kann auch auf andere Weise erfolgen, z.B. mittels einer Fernbedienung.

Durch die Ladekabellageranordnung 1, die in einem Bereich hinter dem Kraftfahrzeug-Kennzeichenschild angeordnet ist, kann ein die Ladekabellageranordnung 1 nutzender Bediener das Ladekabel 2 benutzerfreundlich und ergonomisch handhaben. Der Bediener kann sich in einfacher Weise von außerhalb des Kraftfahrzeugs Zugang zu dem Ladestecker 4 verschaffen und das Ladekabel 2 zum Laden einer Kraftfahrzeug-Batterie mit einer Ladestation bzw. Ladesäule verbinden. Hierzu kann die Kennzeichen-Halterungseinrichtung 8 zunächst von der die Öffnung 7 abdeckenden Position in die die Öffnung 7 freigebende Position bewegt werden, sodass der Bediener den in den Innenraum 6 eingelegten und nun zugänglichen Ladestecker 4 von Hand ergreifen und herausnehmen kann. Das Ladekabel 2 kann dann zur Herstellung der elektrischen Verbindung mit der Ladestation auf die gewünschte Länge ausgezogen werden. Nachdem die Kraftfahrzeug-Batterie den gewünschten Ladungszustand erreicht hat, wird der Ladestecker 4 von der Ladestation getrennt und wieder über die Öffnung 7 in den Innenraum 6 des Aufnahmebehälters 5 eingelegt. Sodann kann die Kennzeichen-Halterungseinrichtung 8 wieder in die die Öffnung 7 abdeckende Position bewegt werden.

In **Fig. 2** ist ausschnittsweise ein Kraftfahrzeug 15 mit einer Ladekabellageranordnung 1 dargestellt, bei dem der Aufnahmebehälter 5 in einem Bereich hinter dem rückwärtigen Kraftfahrzeug-Kennzeichenschild 16 angebracht ist. Dadurch, dass der Aufnahmebehälter 5 (in der die Öffnung 7 abdeckenden Position) auf der Höhe des Kraftfahrzeug-Kennzeichens 16 angeordnet ist, kann ein den Ladestecker 4 handhabender Bediener diesen leicht ergreifen und somit das Ladekabel 2 auf einfache Weise mit einer Ladestation verbinden. Die Ladekabellageranordnung 1 und somit das Kraftfahrzeug-Kennzeichenschild 16 ist an der Heckklappe 17 des Kraftfahrzeugs 15 angebracht, wodurch die ergonomische Handhabung des Ladesteckers 4 weiter unterstützt wird.

Die Kennzeichen-Halterungseinrichtung 8 ist in der die Öffnung 7 abdeckenden Position durch die Zentralverriegelung des Kraftfahrzeugs 15 arretierbar, wodurch sichergestellt ist, dass unbefugte Personen über die Öffnung 7 und den Aufnahmebehälter 5 keinen Zugang zu dem Kraftfahrzeug 15 erhalten. Das Kraftfahrzeug 15 umfasst des Weiteren eine Kraftfahrzeug-Batterie 18 sowie ein einenends mit der Kraftfahrzeug-Batterie 18 verbundenes Verbindungskabel 19a, 19b, das anderenends mit dem Ladekabel 2 elektrisch verbindbar ist. Die typischer Weise als Lithium-Ionen-Akku ausgebildete Kraftfahrzeug-Batterie 18 stellt die Energie zum Antrieb des Kraftfahrzeugs 15 zur Verfügung und ist im Bereich der Rücksitze 20 des Kraftfahrzeugs 15 bzw. im Bereich des Bodens des Kraftfahrzeugs 15 angeordnet.

Das Ladekabel 2 und das Verbindungskabel 19a, 19b sind über ein heckklappenseitiges Kontaktelement 21 und ein damit zusammenwirkendes karosserieseitiges Kontaktelement 22 elektrisch verbindbar. Dabei trennen oder verbinden die Kontaktelemente 21, 22 das Verbindungskabel 19a, 19b in einen batterieseitigen Teil 19a und einen ladekabellageranordnungsseitigen Teil 19b. Bei geschlossener Heckklappe 17 wirken die beiden Kontaktelemente 21, 22 zusammen und stellen die elektrische Verbindung zwischen dem Ladestecker 4 bzw. der Ladestation und der Kraftfahrzeug-Batterie 18 her. Das Ladekabel 2 weist an dem dem ladesteckerseitigen Ende 3 abgewandten Ende 23 einen Anschluss 24 auf, der fest mit dem Kraftfahrzeug 15 verbunden ist, und zwar im Bereich der Wickelvorrichtung 11. Der Anschluss 24 steht mit dem ladekabellagerungsseitigen Teil 19b des Verbindungskabels 19a, 19b in elektrischer Verbindung.

**Fig. 3** zeigt das Kraftfahrzeug 15 in einer Rückansicht, in welcher der hinter dem Kraftfahrzeug-Kennzeichenschild bzw. hinter der Kennzeichen-Halterungseinrichtung 8 angeordnete Aufnahmebehälter 5 sowie der in dem Aufnahmebehälter 5 gelagerte Ladestecker 4 ersichtlich ist. Ferner ist die Anordnung der Wickelvorrichtung 11 in der Heckklappe 17 des Kraftfahrzeugs 15 sowie der Verlauf des Lade- und des Verbindungskabels 2, 19a, 19b dargestellt. Am Übergang der Heckklappe 17 zum Kraftfahrzeug-Boden sind auch das heckklappenseitige Kontaktelement 21 und das damit zusammenwirkende karosserieseitige Kontaktelement 22 gezeigt.

Die **Fign. 4a** bis **4c** zeigen jeweils die die Öffnung 7 abdeckenden (durchgezogene Linien) als auch die die Öffnung 7 freigebenden Positionen (gestrichelte Linien) der Kennzeichen-Halterungseinrichtung 8, wobei die entsprechenden Ladekabellageranordnungen 1 jeweils unterschiedliche Schwenkeinrichtungen 12 umfassen, mittels derer die Kennzeichen-Halterungseinrichtung 8 von der einen in die andere Position und umgekehrt verschwenkt werden können. Die Schwenkbewegung kann dabei aus die Kennzeichen-Halterungseinrichtung 8 parallel versetzenden und/oder die Kennzeichen-Halterungseinrichtung 8 drehenden bzw. verschwenkenden Bewegungskomponenten zusammengesetzt sein. Die Schwenkeinrichtungen 12 der Fign. 4a, 4b weisen jeweils Scharniermittel 25 auf, die als Parallelkinematik ausgebildet sind, d.h. die zwei oder mehr parallel wirkende Scharniere bzw. Gelenke umfassen. Die Schwenkeinrichtung 12 der Fig. 4c umfasst hingegen als Scharniermittel 25 eine an einem oberen Rand des Aufnahmebehälters 5 angeordnete Gelenk-Achse, um die die Kennzeichen-Halterungseinrichtung 8 schwenkbar gelagert ist.

Die Schwenkeinrichtungen 12 sind jeweils so ausgebildet, dass bei in die freigebende Position bewegter Kennzeichen-Halterungseinrichtung 8 eine hindernisfreie Sicht in den Innenraum 6 des Ablagebehälters 5 gegeben ist. Darüber hinaus bietet das Kraftfahrzeug-Kennzeichenschild 16 bzw. die Kennzeichen-Halterungseinrichtung 8 in der freigebenden Position einen Schutz des jeweils dahinter angeordneten Teils des Kraftahrzeugs vor Spritzwasser. In der die Öffnung 7 abdeckenden Position ist entsprechend der Innenraum 6 des Aufnahmebehälters 5 vor Spritz- und/oder Regenwasser geschützt.

Da sich die die Öffnung 7 freigebende Position der Kennzeichen-Halterungseinrichtung 8 in den Fign. 4b und 4c oberhalb von der die Öffnung 7 abdeckenden Position befindet, kann die nach oben verschwenkte Kennzeichen-Halterungseinrichtung 8 mit dem daran befestigten Kraftfahrzeug-Kennzeichenschild 16 als ein Schutz des Aufnahmebehälters 5 bzw. des Ladekabels vor Niederschlag (Schnee oder Regen) dienen. An der in den Fign. 4a bis 4c dargestellten Heckklappe 17 des Kraftfahrzeugs ist zur Montage der Ladekabellageranordnung 1 jeweils eine Öffnung 26 ausgebildet, über die der Aufnahmebehälter 5 in die Heckklappe 17 eingesetzt und mit der Heckklappe 17 z.B. über eine Schraubverbindung fest verbunden werden kann.

## Patentansprüche

1. Ladekabellageranordnung (1) für ein Kraftfahrzeug (15), umfassend:
ein Ladekabel (2) mit einem einenends daran angebrachten Ladestecker (4) zur Verbindung des Ladekabels (2) mit einer Ladestation,
einen Aufnahmebehälter (5), in dessen Innenraum (6) der Ladestecker (4) lagerbar ist, wobei der Aufnahmebehälter (5) eine Öffnung (7) zum Herausnehmen oder Einlegen des Ladesteckers (4) aufweist, sowie eine Kennzeichen-Halterungseinrichtung (8) zur Halterung eines Kraftfahrzeug-Kennzeichenschilds (16), die von einer die Öffnung (7) abdeckenden Position in eine die Öffnung (7) freigebende Position und umgekehrt bewegbar ist.

2. Ladekabellageranordnung nach Anspruch 1, bei der das Ladekabel (2) anderenends einen Anschluss (24) aufweist, der fest mit dem Kraftfahrzeug (15) verbindbar ist.

3. Ladekabellageranordnung nach Anspruch 1 oder 2, weiter umfassend: eine in dem Innenraum (6) des Aufnahmebehälters (5) angeordnete Halterungseinrichtung (9) zur Halterung des eingelegten Ladesteckers (4).

4. Ladekabellageranordnung nach einem der vorhergehenden Ansprüche, weiter umfassend: eine Wickelvorrichtung (11) zum Auf- und Abwickeln des Ladekabels (2).

5. Ladekabellageranordnung nach einem der vorhergehenden Ansprüche, weiter umfassend: eine Schwenkeinrichtung (12) zum Verschwenken der Kennzeichen-Halterungseinrichtung (8) von der die Öffnung (7) abdeckenden Position in die die Öffnung (7) freigebende Position und umgekehrt.

6. Ladekabellageranordnung nach Anspruch 5, bei der die Schwenkeinrichtung (12) Scharniermittel (13) aufweist, die insbesondere als Parallelkinematik ausgebildet sind.

7. Ladekabellageranordnung nach einem der vorhergehenden Ansprüche, weiter umfassend: eine Aktivierungseinrichtung (14) zum Aktivieren einer Öffnungsbewegung der Kennzeichen-Halterungseinrichtung (8) von der die Öffnung (7) abdeckenden in die die Öffnung (7) freigebende Position.

8. Kraftfahrzeug (15) mit einer Ladekabellageranordnung (1) nach einem der vorhergehenden Ansprüche, bei dem der Aufnahmebehälter (5) in einem Bereich hinter einem Kraftfahrzeug-Kennzeichenschild (16), insbesondere in einem Bereich hinter dem rückwärtigen Kraftfahrzeug-Kennzeichenschild (16), angebracht ist.

9. Kraftfahrzeug nach Anspruch 8, bei dem die Ladekabellageranordnung (1) an der Heckklappe (17) des Kraftfahrzeugs (15) angebracht ist.

10. Kraftfahrzeug nach Anspruch 8 oder 9, bei dem zur Montage der Ladekabellageranordnung (1) an der Karosserie des Kraftfahrzeugs (15), insbesondere an der Heckklappe (17), eine Öffnung (26) zum Einsetzen des Aufnahmebehälters (5) ausgebildet ist.

11. Kraftfahrzeug nach einem der Ansprüche 8 bis 10, bei dem die Kennzeichen-Halterungseinrichtung (8) in der die Öffnung (7) abdeckenden Position durch die Zentralverriegelung des Kraftfahrzeugs (15) arretierbar ist.

12. Kraftfahrzeug nach einem der Ansprüche 8 bis 11, bei dem sich die die Öffnung (7) freigebende Position der Kennzeichen-Halterungseinrichtung (8) oberhalb der die Öffnung (7) abdeckenden Position der Kennzeichen-Halterungseinrichtung (8) befindet.

13. Kraftfahrzeug nach einem der Ansprüche 8 bis 12, weiter umfassend: eine Kraftfahrzeug-Batterie (18) sowie ein einenends mit der Kraftfahrzeug-Batterie (18) oder anderen System-Komponenten verbundenes Verbindungskabel (19a, 19b), das anderenends mit dem Ladekabel (2) elektrisch verbindbar ist.

14. Kraftfahrzeug nach Anspruch 13, bei dem das Ladekabel (2) und das Verbindungskabel (19a, 19b) über ein heckklappenseitiges Kontaktelement (21) und ein damit zusammenwirkendes karosserieseitiges Kontaktelement (22) elektrisch verbindbar sind.
